# EUROPEAN PATENT SPECIFICATION

(11) **EP 0 918 324 B1**
(45) Date of publication and mention of the grant of the patent: **07.11.2001**
(21) Application number: 97830614.0
(22) Date of filing: 21.11.1997
(51) Int. Cl.: G11B 7/26

(54) **A machine for processing optical discs and method of transporting optical discs being processed thereby**
Maschine zur Verarbeitung von optischen Platten und Verfahren zum Transportieren von optischen Platten während deren Verarbeitung
Machine pour traitement de disques optiques, et procédé de transport de disques optiques en cours de traitement

(43) Date of publication of application: 26.05.1999
(73) Proprietor: TAPEMATIC S.p.A., I-20052 Monza (Milano) (IT)
(72) Inventor: Perego, Luciano, 20050 Mezzago (Milano) (IT)
(74) Representative: Righetti, Giuseppe

(56) References cited:
- WO-A-97/24218
- GB-A- 2 217 107

## Description

The present invention relates to a machine for processing optical discs comprising. The features expressed in the preamble of claim 1.

The subject of the invention is also a method of transporting optical discs being processed on a machine for their realisation comprising: a first phase providing for the deposit of at least one optical disc in at least one feeding station; a second phase wherein the optical disc is drawn from the feeding station; a third phase wherein the optical disc is inserted into at least one work station; at least a fourth phase wherein the optical disc is removed from the work station; a fifth phase wherein the optical disc is released into at least one outlet station.

More in detail the present invention finds use in the production of optical discs for the support of data commercially identified by the acronyms "CD" and/or "DVD".

Two production methods able to obtain as a final product optical discs containing legible data are fundamentally known. A first known production method can be effected by means of a machine which through an injection moulding phase produces a disc which already contains the data.

Such a disc is subsequently subjected to other work phases to be made legible. To each work phase corresponds a work station operatively engaged on the machine. The machine further comprises transport means to transfer the discs exiting the moulding station, sequentially and consecutively along the other stations. The transport means are mostly constituted by mechanical manipulators and/or movable support arms which can be operated with alternative motion and bearing suction cup elements or equivalent grip methods for the sequential engagement of the discs being processed.

The machines of the type described above however present high realisation costs, and are conceived and suited exclusively for large scale production of optical discs, proving to be ill suited to the production of small batches.

The machines of this type moreover present size problems, essentially linked to the transfer of the optical discs along the various work stations arranged essentially in a horizontal plane.

A second known production method, whereto the present invention is particularly aimed, entails the use of duplication devices set to read data from a source and to write the data thus read onto a destination support. More in particular the source comprises a reading device which reads the data contained in an optical disc called "MASTER" and the destination support comprises a writing device which definitively writes the data read previously, on virgin optical discs. Currently this type of production is performed by setting a plurality of duplication devices which are fed manually by an operator who inserts the discs into the corresponding devices.

After performing the duplication, the discs are extracted, also manually, and stored in a predetermined place.

There are also automation systems to transfer the virgin discs being processed onto duplication devices and subsequently into any other work stations which maybe in use. Such means are constituted by mechanical manipulators which speed up production with respect to the production performed manually by the user, but present the problem of having to transfer the discs individually, thereby still determining a rather slow production speed.

An example of a machine provided with an automation system for the transfering of the discs is disclosed in the document WO-A-97 24218.

Object of the present invention is to overcome the problems described above by means of a machine for processing optical discs of relatively simple, rational and small design and structure, such as to offer remarkable flexibility with respect to the quantity of discs produced and to the type of production which may be performed.

This object and others besides which will be made clearer in the course of the present description, are essentially attained by a machine for processing optical discs characterised in that: said feeding station comprises a plurality of feeding supports set parallel to each other and able to be vertically aligned each in correspondence with each work unit; said outlet station comprises a plurality of outlet supports set parallel to each other and able to be aligned vertically each in correspondence with each work unit; said transport means comprise a plurality of transport arms each associated with a work unit to draw and deposit simultaneously the optical discs being processed and/or already processed.

According to the present invention a method is executed of transferring optical discs being processed on a machine for their realisation, characterised in that: said first phase entails the disposition of a plurality of optical discs in vertical alignment on related feeding supports comprised in the feeding station, each disc being placed in correspondence with a respective work station; said fifth phase entails the disposition of a plurality of optical discs in vertical alignment on respective outlet supports comprised in the outlet station, each exiting disc being placed in correspondence with a respective work station.

Additional characteristics and advantages shall be made clearer by the detailed description of a preferred, but not exclusive, embodiment for processing optical discs and a method of transporting the discs being processed on said machine, according to the present invention.

Such description shall be made hereafter with reference to the enclosed drawings, provided purely by way of non limiting indication, in which:

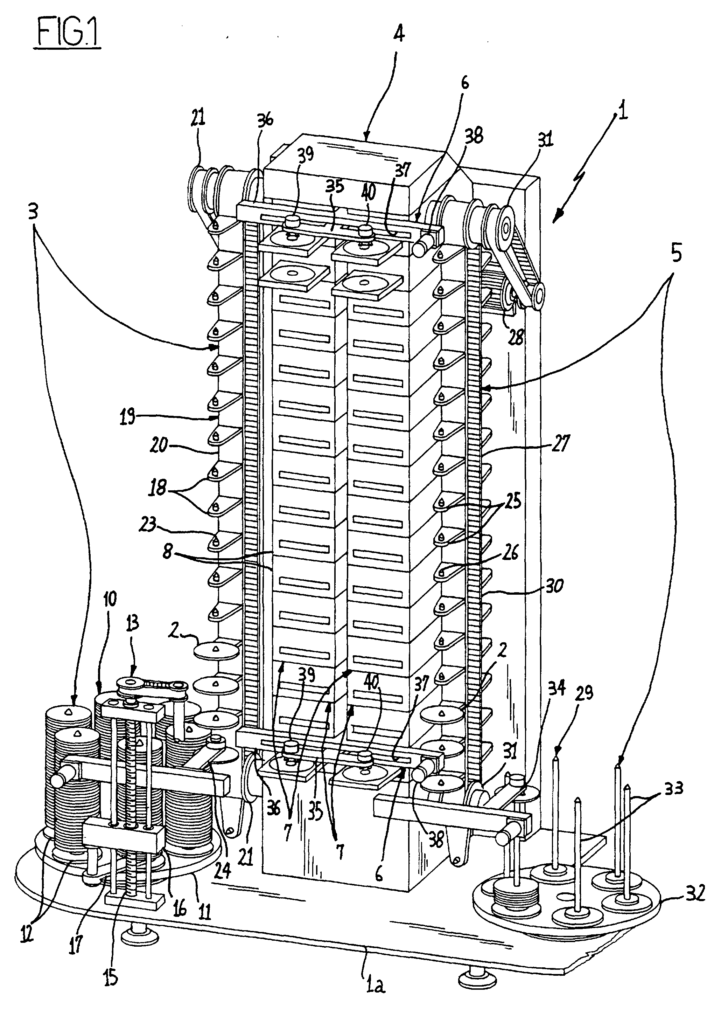

- Figure 1 shows the machine in perspective view;
- Figure 2 shows the machine in front view;
- Figure 3 shows the machine in top view.

With reference to the Figures mentioned the number 1 indicates in its entirety a machine for processing optical discs 2, according to the present invention.

The machine 1 comprises a feeding station 3, a work station 4, an outlet station 5 storing the processed optical discs and transport means 6 to carry the optical discs 2 from the feeding station 3 to the work station 4 and, subsequently, from the work station 4 to the outlet station 5.

The work station 4 comprises a plurality of work units 7 set parallel to each other and aligned vertically. In the described embodiment, each work unit 7 comprises at least a first processing device and at least a second processing device 8, 9. The first processing device comprises an optical recorder, set to record on virgin optical discs 2 the data read by an optical reader operatively connected with the work units 7 and not shown since it is known in the prior art. The second processing device comprises a serigrapher, set to effect personalisations or to print information on the recorded discs 2.

The feeding station 3 comprises a feeding magazine 10 containing the optical discs 2 being processed. The feeding magazine 10 is constituted by a base feeding disc 11 bearing a series of loaders 12 distributed circumferentially around a vertical axis of rotation of the disc itself.

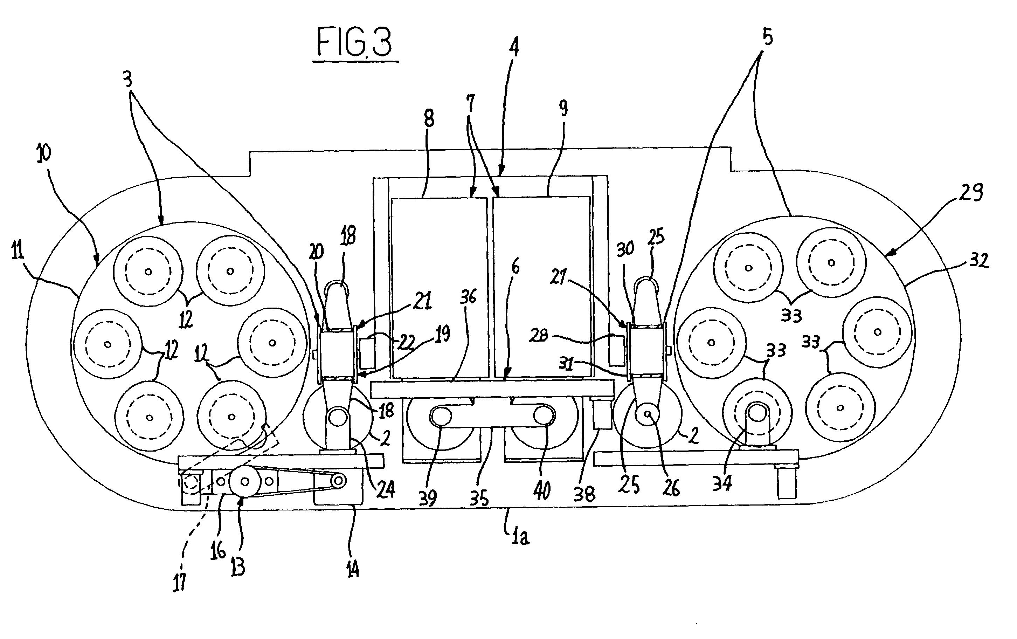

The feeding magazine 10 further comprises a feeder device 13 having a first feeding motor 14 (Figure 3) engaging rotationally a worm gear 15 to make a lifting carriage 16 translate thereon. The lifting carriage 16 presents a lifting arm 17 which acts under the discs 2 of the respective magazine 12 to support them and, when required, to lift them until taking to a pre-determined level the last disc 2 located at the top of the loader itself.

The feeding station 3 further comprises a plurality of feeding supports 18 set parallel to each other and able to be aligned vertically each in correspondence with each work unit 7.

The feeding supports 18 are distributed along a feeding conveyor 19 constituted by a feeding belt 20 maintained under tension by corresponding feeding pulleys 21 engaged on the base structure 1a of the machine 1. The feeding belt 21 is essentially placed in a position aside the work station 4 on the side of the recording devices 8.

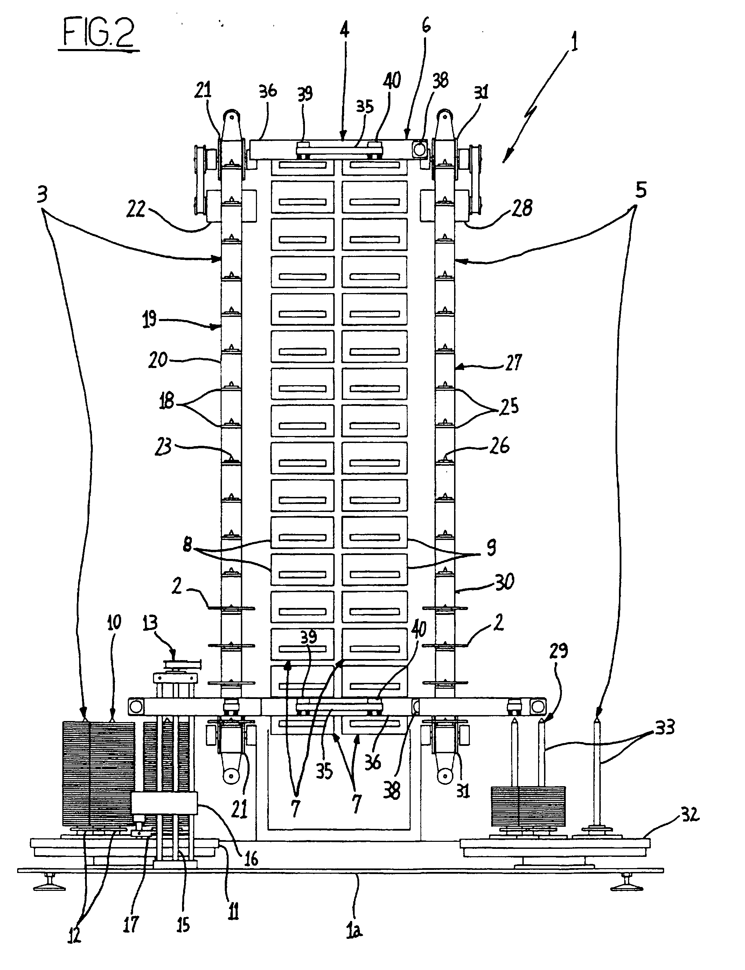

Through a second feeding motor 22 (Figure 2) operating on one of the feeding pulleys 21 the feeding supports 18 are translated according to a stepped motion to be carried cyclically and sequentially in correspondence with the feeding magazine 10 and, subsequently, in correspondence with the work units 7.

The feeding supports 18 are distanced from each other according to a measure corresponding to the distance between two consecutive work units 7 and each presents a grip pin 23, for the engagement of a respective optical disc 2.

Fastened to the base structure 1a of the machine 1 is present a feeder arm 24 which is movable between a first position, wherein the feeder arm 24 is located in proximity to the feeding magazine 10 to draw the disc 2 carried to the pre-set level by the lifting arm 17 and a second position, wherein said feeding arm 24 is located in proximity to the feeder conveyor 19 to deposit the disc itself on a respective feeding support 18. The withdrawal and deposit of the discs occurs for instance by means of suction cup elements or equivalent pneumatic means controlled vertically to approach or move away by the feeding arm or through the vertical motion thereof.

Once the supply of optical discs 2 present in a loader 12 is depleted the base feeder disc 9 rotates according to a pre-set angle around its own vertical axis, to replace the empty loader 12 with a full loader, thereby guaranteeing a continuous feeding of the machine 1.

The outlet station in turn comprises a plurality of outlet supports 25 positioned parallel to each other and able each to be aligned vertically in correspondence with each work unit 7. The outlet supports 25 are distanced from each other according to a measure corresponding to the distance between two consecutive work units 7, and each presents an outlet pin 26, for the engagement of a respective optical disc 2.

Similarly to what has been described with reference to the feeding station 3 the outlet supports 25 are borne by an outlet conveyor 27 which, by means of an outlet motor 28, translates the supports themselves cyclically and sequentially according to a stepped motion in correspondence with each work unit 7 and, subsequently, in correspondence with an outlet magazine 29 comprised in the outlet station 5.

The outlet conveyor 27 is preferably constituted by an outlet belt 30 kept under tension by means of outlet pulleys 31 engaged on the base structure 1a of the machine 1. The outlet pulley 30 is essentially set in a position aside the work station 7 on the side of the serigraphy devices 9.

The outlet magazine 29 comprises an outlet base disc 32 having a series of holders 33 arranged circumferentially around a vertical axis of rotation of the base disc itself.

The outlet station 5 further comprises at least one outlet arm 34 movable between a first position wherein said outlet arm 34 is positioned in proximity to the outlet conveyor 27 to draw the processed optical discs 2 from the outlet supports 25 and a second position wherein the outlet arm 34 is positioned in proximity to the outlet magazine 29 to deposit said discs 2 in the holders 33.

The discs 2 are drawn and deposited by means of suction cup elements or equivalent pneumatic means as for the feeding arm 24.

The outlet arm 34 continues to deposit the discs 2 into the respective holder 33 until reaching a maximum collection limit, detected by suitable sensors. When this occurs the outlet base disc 32 rotates around its vertical axis setting an empty holder 33 to co-operate with the outlet arm 34.

The transport means 6 comprise a plurality of transport arms 35 each of which, by means at least of one rigid support 36, is associated to one of the work units 7 to draw and deposit simultaneously the optical discs 2 being processed and/or already processed.

More in detail each transport arm 35 runs in a groove 37 present on the respective rigid support 36 to transport the optical discs 2. Upon command of a respective transfer motor 38, each transport arm 35 is movable from a first position to a second position to bring a first grip head 39 respectively from the work station 4 to the feeding station 3. When the transport arm 35 is in the second position, the first grip head 39 grasps the corresponding optical disc 2.

The grip heads 39, 40 of the transport arm 35 can for instance present suction cup elements or pneumatic means functioning essentially like those present on the feeding arm 24 and outlet arm 34.

The transport arm 35 moves again from the second position to the first position to transfer to the work station 4 the optical disc 2 drawn from the feeding support 18.

In the embodiment shown, to each transport arm 35 is also associated at least a second grip head 40 movable between the work station 4 and the outlet station 5 following the translation of the transport arm itself between the first position and a third position.

More in particular the transport arm 35 is set to carry the first grip head 39 between the feeding station 3 and the respective recording device 8 when the arm itself runs between the first position and the second position. Simultaneously, the second grip head 40 is carried by the respective recording device 8 to the respective serigraphy device 9.

When the transport arm 35 moves between the first and the third position the first head 39 is carried by the respective recording device 8 to the respective serigraphy device 9. Simultaneously, the second grip head 40 is moved from the respective serigraphy device 9 to the outlet station 5.

According to the present invention, the transport of the optical discs 2 in the machine 1 occurs according to a method which shall be described better in the following exposition of the functional sequence of the various organs of the machine itself.

Before starting the operating cycle, as well as during the execution thereof, the feeding magazine 10 is resupplied with loaders 12 carrying the respective discs 2 to be processed.

According to a first phase of the subject method, the feeding arm 24 grasps a disc 2 from the respective loader 12 to carry it in correspondence with the feeding conveyor 19 and deposit it on the respective feeding support 18.

Once the optical disc 2 has been deposited onto the aforesaid feeding support 18, the feeding belt 20 is made to move by one step by the second feeding motor 22.

Simultaneously with the movement of the belt 23 the feeding arm 18 moves to grasp an additional disc 2 from the feeding magazine 10, and subsequently to deposit it onto a new feeding support 18.

The transfer operation of the optical discs 2 from the feeding magazine 10 to the feeding conveyor 19 is repeated until a pre-set number of feeding supports 18, for instance corresponding to the number of work units 7 present in the machine 1, are provided each with a respective optical disc 2 being processed, placed in correspondence with a respective work unit 7.

According to a second phase of the subject method, when all feeding supports 18 corresponding to the work units 7 are engaged by the discs 2, the transport arms 35 simultaneously translate from the first position to the second position thereby taking the respective first grip heads 39 to draw the discs 2 from the feeding station 3.

Subsequently said transport arms 35 translate towards the first position, in such a way that the discs 2, upon the action of the respective first grip heads 39, are transferred and operatively inserted each in the respective recording device 8, thereby executing a third phase of the method according to the invention.

As soon as the discs 2 have been removed from the feeding conveyor 19, the feeding station 3 starts a new operating cycle whose purpose is to load a new series of discs 2.

In the meantime, the discs 2 previously removed from the conveyor 19 are processed in the work station 4 to be subsequently removed therefrom, according to fourth phase of the subject method, and unloaded into the outlet station 5, according to a fifth phase of the method.

More in particular, once processing of the discs 2 in the recording devices 8 has been completed, each first grip head 39 grasps the recorded disc 2, whereupon each transport arm 35 translates between the first position and the third position. When each transport arm 35 is in the third position each first grip head 39 deposits the disc 2 into the serigraphy device 9. Whilst the discs 2 are being processed in the serigraphy devices 9 the transport arms 35 translate again from the third position to the second position grasping by means of the respective first grip heads 39, the new discs 2 set on the feeding conveyor 19. Each transport arm 35 then moves from the second position to the first position inserting the new disc 2 into the recording device 8.

Once both recording and serigraphy work processes are completed each transport arm 35 translates from the first position to the third position carrying the recorded disc 2 in correspondence with the serigraphy device 9 by means of the first grip head 39, and the serigraphed disc 2 in correspondence with the respective outlet support 25 by means of the second grip head 40.

Once the serigraphed disc 2 has been deposited on the outlet support 25, each transport arm 35 again reaches the second position to continue the cycle described above, simultaneously transferring a new disc 2 from the respective feeding support 20 to the recording device 8 by means of the first grip head 39, as well as the recorded disc 2, from the respective recording device 8, to the serigraphy device 9 by means of the second grip head 40.

When the discs 2 are deposited on outlet supports 25 the outlet motor 28 moves step by step the outlet belt 30 comprised in the outlet conveyor 27 to make the discs 2 housed on the outlet supports 26 be drawn sequentially by the outlet arm 34.

The outlet arm 34 transfers the disc directly into the outlet magazine depositing them in the respective holder 33.

The operating cycle described above can be executed simultaneously on a maximum number of discs 2 corresponding to the number of work units 7 provided in the machine 1, in order to obtain a high productivity, particularly advantageous in large scale production.

For the production of small lots or samples, the machine 1 can be operatively set to perform different work cycles, both in regard to the content of the pieces recorded and of the serigraphy, and in regard to execution times.

For example, it can be provided for the first ten work units 7 to be used to record a given programme on the discs 2, whilst the remaining work units 7 record a different programme from the first.

In this case, by appropriately commanding the angular rotation of the outlet base disc 32, it will be possible to select each time the holder 33 placed in operative engagement with the outlet arm 34, to cause the discs 2 containing the same programme to be conveyed onto a same holder 33.

The machine 1 described above presents a compact structure and reduced size, and therefore is suited to be placed even in small spaces.

The subject machine 1 also presents relatively reduced realisation and manufacturing costs, and it presents an exceptional operating flexibility which makes it suitable also for producing discs in small numbers.

It should also be noted that the invention solves all problems connected to the production of discs performed by means of manually executed loading and unloading phases, optimising production by means of the simultaneous transport of the discs being processed in the work station, operation which, even with the automation systems of the prior art, was performed individually on each disc thus resulting in very long production times.

Naturally, the invention thus conceived can be subject to numerous modifications and variations. For instance to each transport arm 35 can be associated a third grip head, or in any case one grip head more than the number of processing devices pre-set in each work unit 7, to transfer the optical discs from the feeding station 3 to the outlet station 5 (through the various processing devices 7, 8) moving only the transport arm 35 between a first and a second operative position.

## Claims

1. Machine for processing optical discs comprising:
at least one feeding station (3);
at least one work station (4) comprising a plurality of work units (7) set parallel to each other and aligned vertically;
at least one outlet station (5) storing the processed optical discs (2);
transport means (6) to carry the optical discs (2) from the feeding station (3) to the work station (4) and subsequently from the work station (4) to the outlet station (5);
**characterised in that**:
said feeding station (3) comprises a plurality of feeding supports (18) set parallel to each other and able to be aligned vertically each in correspondence with each work unit (7);
said outlet station (5) comprises a plurality of outlet supports (25) set parallel to each other and able to be aligned vertically each in correspondence with each work unit (7);
said transport means (35) comprise a plurality of transport arms (35) each associated to a work unit (7) to grip and deposit simultaneously the optical discs (2) being processed and/or already processed.

2. Machine according to claim 1, **characterised in that** each transport arm (35) is movable between a first position and a second position to carry at least a first grip head (39) from the work station (4) to the feeding station (3).

3. Machine according to claim 2, **characterised in that** said transport arm (35) is movable longitudinally between the first position and a third position to take the first grip head (39) from the work station (4) to the outlet station (5).

4. Machine according to claim 2, **characterised in that** it further comprises at least a second grip head (40) engaged on each transport arm (35) and movable between a work station (4) and the outlet station (5) in the moment wherein the arm itself translates between the first position and the second position.

5. Machine according to claim 1, **characterised in that** said feeding station (3) comprises:
at least a feeding magazine (10) containing the optical discs (2) being processed;
at least a feeding conveyer (19) carrying said feeding supports (18) and able to be operated step by step to carry cyclically and sequentially the feeding supports (18) in correspondence with the feeding magazine (10) and subsequently in correspondence with the work units (7);
at least a feeding arm (24) movable between a first position wherein the feeding arm (24) is situated in proximity to the feeding magazine (10) to draw the discs (2) being processed therefrom and a second position wherein said arm is situated in proximity to the feeding conveyer (19) to deposit said discs (2).

6. Machine according to claim 5, **characterised in that** said feeding supports (18) are distanced from each other by the same interval separating two consecutive work units (7).

7. Machine according to claim 1, **characterised in that** said outlet station (5) comprises:
at least one outlet magazine (29) containing the processed optical discs (2);
at least one outlet conveyor (27) able to be operated step by step to carry cyclically and sequentially the outlet supports (25) in correspondence with the work units (7) and subsequently in correspondence with the outlet magazine (29);
at least one outlet arm (34) movable between a first position wherein the outlet arm (34) is situated in proximity to the outlet conveyer (27) to draw the processed discs (2) on the outlet supports (25) and a second position wherein said arm is situated in proximity to the outlet magazine (29) to deposit said discs (2).

8. Machine according to claim 7, **characterised in that** said outlet supports (25) are distanced from each other by the same interval that separates two consecutive work units (7).

9. Machine according to claim 1, **characterised in that** each transport arm (35) can be operated in motion independently from the other transport arms (35) thereby allowing the machine (1) simultaneously to perform work processes having different execution times.

10. Machine according to claim 1, **characterised in that** said work units (7) comprise at least a first and a second processing device (8, 9) to operate multiple work processes on a same disc.

11. Machine according to claim 10, **characterised in that** said first and second processing devices (8, 9) comprise respectively at least a data recording device (8) and at least a serigraphy device (9).

12. Method of transporting discs being processed by a machine according to claim 1, comprising the following phases:
a first phase entailing the deposit of at least one optical disc (2) into at least one feeding station (3);
a second phase wherein the optical disc (2) is drawn from the feeding station (3);
a third phase wherein the optical disc (2) is inserted into at least one work station (4);
a fourth phase wherein the optical disc (2) is removed from the work station (4);
a fifth phase wherein the optical disc (2) is unloaded into at least one outlet station (5);
**characterised in that**:
said first phase entails the disposition of a plurality of optical discs 2 in vertical alignment onto respective feeding supports (18) comprised in the feeding station (3), each optical disc (2) being positioned in correspondence with a respective work station (4);
said fifth phase entails the disposition of a plurality of optical discs (2) in vertical alignment onto respective outlet supports (25) comprised in the outlet station (5), each outlet support (25) being located in correspondence with a respective work station (7).

13. Method according to claim 12, **characterised in that**: said second phase entails the simultaneous drawing of said optical discs (2) being processed housed on the respective feeding supports (18);
said third phase entails the simultaneous insertion of the optical discs (2) being processed into the work units (7);
said fourth phase entails the simultaneous removal of the processed optical discs from the work units (7);
said fifth phase entails the simultaneous unloading of the optical discs (2) onto the respective outlet supports (25).

14. Method according to claim 12, **characterised in that** the second and the third phase are executed on the discs (2) being processed simultaneously with the execution of the fourth and fifth phase on the discs (2) already processed.

15. Method according to claim 12, **characterised in that** the optical discs (2) being processed are moved independently from each other from the feeding supports (18) to the work units (7) and subsequently to the outlet supports (25).

16. Method according to claim 12, **characterised in that** said first phase comprises the following sub-phases:
setting the feeding supports (18) in mutual alignment;
moving simultaneously step by step the feeding supports (18) carrying them sequentially and cyclically in correspondence with at least one feeding magazine (10);
transferring the discs (2) individually from the feeding magazine (10) to the respective feeding supports (18) in synchronism with the motion of the outlet supports (25).

17. Method according to claim 12, **characterised in that** after said fifth phase the following sub-phases are performed:
moving step by step the outlet supports (25) sequentially and cyclically in correspondence with at least one outlet magazine (29);
individually transferring the discs (2) from the outlet supports (25) to the outlet magazine (29) in synchronism with the motion of the outlet supports themselves.

## Patentansprüche

1. Maschine zur Verarbeitung von optischen Platten, umfassend:
- mindestens eine Zuführstation (3);
- mindestens eine Bearbeitungsstation (4), umfassend eine Vielzahl von Bearbeitungseinheiten (7), die zueinander parallel angeordnet und vertikal ausgerichtet sind;
- mindestens eine Ausgangsstation (5), welche die optischen Platten (2) speichert;
- Transportmittel (6), um die optischen Platten (2) aus der Zuführstation (3) zur Bearbeitungsstation (4) und nachfolgend von der Bearbeitungsstation (4) zur Ausgangsstation (5) zu bringen;
**dadurch gekennzeichnet, dass**:
- die Zuführstation (3) eine Vielzahl von Zuführstützen (18) umfasst, die zueinander parallel angeordnet und vertikal jeweils im Bereich einer jeden Bearbeitungseinheit (7) ausrichtbar sind;
- die Ausgangstation (5) umfasst eine Vielzahl von Ausgangsstützen (25), die zueinander parallel angeordnet und jeweils im Bereich einer jeden Bearbeitungseinheit (7) vertikal ausgerichtet sind;
- die Transportmittel (35) umfassen eine Vielzahl von Transportarmen (35), die jeweils einer Bearbeitungseinheit (7) zugeordnet sind, um gleichzeitig die optischen, zu bearbeitenden und/oder bearbeiteten Platten (2) zu entnehmen und abzulegen.

2. Maschinen nach Anspruch 1, **dadurch gekennzeichnet, dass** jeder Transportarm (35) zwischen einer ersten Stellung und einer zweiten Stellung beweglich ist, um mindestens einen ersten Greifarm (39) aus der Bearbeitungsstation (4) zur Zuführstation zu bringen.

3. Maschine nach Anspruch 2, **dadurch gekennzeichnet, dass** der Transportarm (35) in Längsrichtung zwischen der ersten Stellung und einer dritten Stellung beweglich ist, um den ersten Greifkopf (39) aus der Bearbeitungsstation (4) zur Ausgangsstation (5) zu bringen.

4. Maschine nach Anspruch 2, **dadurch gekennzeichnet, dass** sie überdies mindestens einen zweiten Greifkopf (40) umfasst, der an jeden Transportarm (35) in Eingriff steht und zwischen der Bearbeitungsstation (4) und der Ausgangsstation (5) im Augenblick beweglich ist, bei dem der Transportarm selbst zwischen der ersten und der zweiten Stellung verstellt wird.

5. Maschine nach Anspruch 1, **dadurch gekennzeichnet, dass** die Zuführstation (3) umfasst:
- mindestens einen Zuführspeicher (10), der die zu bearbeitenden, optischen Platten (2) enthält;
- mindestens einen Zuführförderer (19) der die Zuführstützen (18) trägt und schrittweise betätigbar ist, um taktweise und in Reihenfolge die Zuführstützen (18) in den Bereich des Zuführspeichers (10) und nachfolgend im Bereich der Bearbeitungseinheiten (7) zu bringen;
- mindestens einen Zuführarm (24), der zwischen einer ersten Stellung, in welcher der Zuführarm (24) in der Nähe des Zuführspeichers (10) gelegen ist, um die zu bearbeitenden Platten (2) aus demselben zu entnehmen, und einer zweiten Stellung beweglich, in der Transportarm in der Nähe des Zuführförderers (19) gelegen ist, um die Platten (2) abzulegen.

6. Maschine nach Anspruch 5, **dadurch gekennzeichnet, dass** die Zuführstützen (18) von einander mit dem selben Abstand beabstandet sind, der zwischen zwei nacheinander folgenden Bearbeitungseinheiten (7) besteht.

7. Maschine nach Anspruch 1, **dadurch gekennzeichnet, dass** die Ausgangsstation (5) umfasst:
- mindestens einen Ausgangsspeicher (29) der die optischen bearbeiteten Platten (2) enthält;
- mindestens einen Ausgangsförderer (27), der schrittweise betätigbar ist, um die Ausgangsstützen (28) taktweise und in Reihenfolge in den Bereich der Bearbeitungseinheiten (7) nachfolgend in den Bereich des Ausgangsspeichers (29) zu bringen;
- mindestens einen Ausgangsarm (34), der zwischen einer ersten Stellung, in der Ausgangsarm (34) in der Nähe des Ausgangförderers (27) liegt, um die bearbeiteten Platten (2) auf den Ausgangsstützen (25) zu entnehmen, und einer zweiten Stellung beweglich ist, in welcher der Transportarm in der Nähe des Ausgangmagazins (29) gelegen ist, um die Platten (2) abzulegen.

8. Maschine nach Anspruch 7, **dadurch gekennzeichnet, dass** die Ausgangsstützen (25) von einander mit dem selben Abstand beabstandet sind, der zwischen zwei nacheinanderfolgenden Bearbeitungseinheiten (7) liegt.

9. Maschine nach Anspruch 1, **dadurch gekennzeichnet, dass** jeder Transportarm (35) unabhängig voneinander den anderen Transportarmen (35) bewegbar ist, wobei der Maschine (1) ermöglicht wird, gleichzeitig Bearbeitungen mit verschiedenen Ausführungszeiten auszuführen.

10. Maschine nach Anspruch 1, **dadurch gekennzeichnet, dass** die Bearbeitungseinheiten (7) mindestens eine erste und eine zweite Behandlungsvorrichtung (8, 9) umfassen, um mehrere Bearbeitungen an einer und derselben Platte zu vollziehen.

11. Maschine nach Anspruch 10, **dadurch gekennzeichnet, dass** die erste und die zweite Behandlungsvorrichtung (8, 9) jeweils mindestens eine Datenaufzeichnungsvorrichtung (8) und mindestens eine Siebdruckvorrichtung (9) umfassen.

12. Verfahren zum Transportieren von optischen Platten während deren Bearbeitung an einer Maschine, nach Anspruch 1, umfassend die folgenden Schritte:
- einen ersten Schritt, der die Ablage mindestens einer optischen Platte (2) in mindestens einer Zuführstation (3) vorsieht;
- einen zweiten Schritt zur Entnahme der optischen Platte (2) aus der Zuführstation (3);
- einen dritten Schritt zum Einbringen der optischen Platte (2) in mindestens eine Bearbeitungsstation (4);
- einen vierten Schritt zur Entfernung der optischen Platte (2) aus der Bearbeitungsstation (4) ;
- einen fünften Schritt, zum Entladen der optischen Platte (2) in mindestens eine Ausgangsstation (5);
**dadurch gekennzeichnet, dass**:
- der erste Schritt vorsieht, eine Vielzahl von optischen Platten (2) in vertikaler Ausrichtung an entsprechenden, der Zuführstation (3) angehörenden Zuführstützen (8) anzuordnen, wobei jede optische Platte (2) im Bereich einer entsprechenden Bearbeitungsstation (4) angesetzt ist;
- der fünfte Schritt sieht vor, eine Vielzahl von optischen Platten (2) in vertikaler Ausrichtung an der Ausgangsstation (5) angehörenden entsprechenden Ausgangsstütze (25) anzuordnen, wobei jede Ausgangsstütze (25) im Bereich einer entsprechenden Bearbeitungsstation (7) angesetzt ist.

13. Verfahren nach Anspruch 12, **dadurch gekennzeichnet, dass**:
- der zweite Schritt sieht vor, simultan die optischen, zu bearbeitenden Platten (2) zu entnehmen, die an entsprechenden Zuführstützen (18) aufgenommen sind;
- der dritte Schritt sieht vor, gleichzeitig die zu bearbeitenden, optischen Platten (2) in die Bearbeitungseinheit (7) einzubringen;
- der vierte Schritt sieht vor, simultan die optischen, von den Bearbeitungseinheiten (7) bearbeiteten Platten (2) zu entfernen;
- der fünfte Schritt sieht vor, gleichzeitig die optischen Platten (2) an entsprechenden Ausgangsstützen (25) zu entladen.

14. Verfahren nach Anspruch 12, **dadurch gekennzeichnet, dass** der zweite und der dritte Schritt an den zu bearbeitenden Platten (2) gleichzeitig mit der Durchführung des vierten und des fünften Schrittes an den bearbeiteten Platten (2) ausgeführt werden.

15. Verfahren nach Anspruch 12, **gekennzeichnet durch** den Schritt, die optischen, zu bearbeitenden Platten (2) unabhängig voneinander von den Zuführstützen (18) zu den Bearbeitungseinheiten (7)d un nachfolgend zu den Ausgangsstützen (25) zu bringen.

16. Verfahren nach Anspruch 12, **dadurch gekennzeichnet, dass** der erste Schritt die folgenden Nebenschritte umfasst:
- Bereitstellung der Zuführstützen (18) in gegenseitiger Ausrichtung ;
- schrittweise und simultane Bewegung der Zuführstützen (18), wobei diese letzteren in Reihenfolge und taktweise in den bereich mindestens eines Zuführspeichers (10) gebracht werden;
- Überführung der Platten (2) einzeln aus den Zuführspeicher (10) zu den entsprechenden Zuführstützen (18) in Gleichlauf mit der Bewegung der Zuführstützen (25).

17. Verfahren nach Anspruch 12, **dadurch gekennzeichnet, dass** nach dem fünften Schritt die folgenden Nebenschritte durchgeführt werden;
- schrittweises Bewegen der Ausgangsstützen (25) in Reihenfolge und taktweise in den Bereich mindestens eines Ausgangsspeichers (29);
- einzelnes Überführen der Platten (2) von den Ausgangsstützen (25) zum Ausgangsspeicher (29) im Gleichlauf mit der Bewegung der Ausgangsstützen selbst.

## Revendications

1. Machine pour le traitement de disques optiques comprenant:
- au moins un poste d'alimentation (3);
- au moins un poste de travail (4) comprenant une pluralité d'unités de travail (7) disposées parallèles les unes aux autres et alignées verticalement;
- au moins un poste de sortie (5) où les disques optiques traités (2) sont emmagasinés;
- des moyens de transport (6) pour transférer les disques optiques (2) du poste d'alimentation (3) au poste de travail (4) et ensuite du poste de travail (4) au poste de sortie (5),
**caractérisée en ce que**:
- ledit poste d'alimentation (3) comporte une pluralité de supports d'alimentation (18) disposés parallèles les uns aux autres et susceptibles d'être alignés verticalement chacun en correspondance avec chaque unité de travail (7);
- ledit poste de sortie (5) comporte une pluralité de supports de sortie (25) disposés parallèles les uns aux autres et susceptibles d'être alignés verticalement chacun en correspondance avec chaque unité de travail (7);
- lesdits moyens de transport (35) comportent une pluralité de bras de transport (35) chacun associé à une unité de travail (7) pour saisir et déposer simultanément les disques optiques (2) en cours de traitement et/ou déjà traités.

2. Machine selon la revendication 1, **caractérisée en ce que** chaque bras de transport (35) est mobile entre une première position et une deuxième position pour amener au moins une première tête de préhension (39) du poste de travail (4) au poste d'alimentation (3).

3. Machine selon la revendication 2, **caractérisée en ce que** ledit bras de transport (35) est mobile longitudinalement entre la première position et une troisième position pour amener la première tête de préhension du poste de travail (4) au poste de sortie (5).

4. Machine selon la revendication 2, **caractérisée en ce qu'**elle comporte en outre au moins une deuxième tête de préhension (40) engagée sur chaque bras de transport (35) et mobile entre un poste de travail (4) et un poste de sortie (5) au moment où le bras lui-même se déplace entre la première et la deuxième positions.

5. Machine selon la revendication 1, **caractérisée en ce que** ledit poste d'alimentation (3) comporte:
- au moins un magasin d'alimentation (10) contenant les disques optiques (2) en cours de traitement;
- au moins un transporteur d'alimentation (19) portant lesdits supports d'alimentation (18) et susceptible d'être entraîné pas à pas pour amener cycliquement et en séquence les supports d'alimentation (18) en correspondance avec le magasin d'alimentation (10) et ensuite en correspondance avec les unités de travail (7);
- au moins un bras d'alimentation (24) mobile entre une première position à laquelle le bras d'alimentation (24) est placé à proximité du magasin d'alimentation (10) pour enlever de ce dernier les disques (2) en cours de traitement et une deuxième position à laquelle ledit bras est placé à proximité du transporteur d'alimentation (19) pour déposer lesdits disques (2).

6. Machine selon la revendication 5, **caractérisée en ce que** lesdits supports d'alimentation (18) sont espacés les uns des autres de la même distance que celle séparant deux unités de travail consécutives.

7. Machine selon la revendication 1, **caractérisée en ce que** ledit poste de sortie (5) comporte:
- au moins un magasin de sortie (29) contenant les disques optiques traités (2);
- au moins un transporteur de sortie (27) susceptible d'être entraîné pas à pas pour porter cycliquement et en séquence les supports de sortie en correspondance avec les unités de travail (7) et ensuite en correspondance avec le magasin de sortie (29);
- au moins un bras de sortie (34) mobile entre une première position à laquelle le bras de sortie (34) est placé à proximité du transporteur de sortie (27) pour enlever les disques traités (2) sur les supports de sortie (25) et une deuxième position à laquelle ledit bras est placé à proximité du magasin de sortie (29) pour déposer lesdits disques (2).

8. Machine selon la revendication 7, **caractérisée en ce que** lesdits supports de sortie (25) sont espacés les uns des autres de la même distance que celle séparant deux unités de travail consécutives (7).

9. Machine selon la revendication 1, **caractérisée en ce que** chaque bras de transport (35) peut être entraîné en mouvement indépendamment des autres bras de transport (35) autorisant ainsi la machine (1) à effectuer simultanément des traitements de travail ayant des temps d'exécution différents.

10. Machine selon la revendication 1, **caractérisée en ce que** lesdites unités de travail (7) comportent au moins un premier et un deuxième dispositifs de traitement (8, 9) pour effectuer plusieurs traitements de travail sur un même disque.

11. Machine selon la revendication 10, **caractérisée en ce que** lesdits premier et deuxième dispositifs de traitement (8, 9) comportent respectivement au moins un dispositif d'enregistrement de données (8) et au moins un dispositif pour la sérigraphie (9).

12. Procédé de transport de disques optiques en cours de traitement par une machine selon la revendication 1, comprenant les étapes suivantes:
- une première étape prévoyant le dépôt d'au moins un disque optique (2) dans au moins un poste d'alimentation (3);
- une deuxième étape dans laquelle le disque optique (2) est retiré du poste d'alimentation (3);
- une troisième étape dans laquelle le disque optique (2) est inséré dans au moins un poste de travail (4);
- une quatrième étape dans laquelle le disque optique (2) est enlevé du poste de travail (4);
- une cinquième étape dans laquelle le disque optique (2) est déchargé dans au moins un poste de sortie (5);
**caractérisé en ce que**:
- ladite première étape prévoit l'arrangement d'une pluralité de disques optiques (2) en alignement vertical sur des supports d'alimentation (18) respectifs faisant partie du poste d'alimentation (3), chaque disque optique (2) étant mis en place en correspondance avec un poste de travail respectif (4);
- ladite cinquième étape prévoit l'arrangement d'une pluralité de disques optiques (2) en alignement vertical sur des supports de sortie (25) respectifs faisant partie du poste de sortie (5), chaque support de sortie (25) étant placé en correspondance avec un poste de travail respectif (7).

13. Procédé selon la revendication 12, **caractérisé en ce que**:
- ladite deuxième étape prévoit l'enlèvement simultané desdits disques optiques (2) en cours de traitement, logés sur les supports d'alimentation respectifs (18);
- ladite troisième étape prévoit l'insertion simultanée des disques optiques (2) en cours de traitement dans les unités de travail (7);
- ladite quatrième étape prévoit l'enlèvement simultané des disques optiques traités des unités de travail (7);
- ladite cinquième étape prévoit le déchargement simultané des disques optiques (2) sur les supports de sortie respectifs (25).

14. Procédé selon la revendication 12, **caractérisé en ce que** les deuxième et troisième étapes sont exécutées sur les disques (2) en cours de traitement simultanément à l'exécution des quatrième et cinquième étapes sur les disques (2) déjà traités.

15. Procédé selon la revendication 12, **caractérisé en ce que** les disques optiques (2) en cours de traitement sont mus indépendamment les uns des autres depuis les supports d'alimentation (18) jusqu'aux unités de travail (7) et ensuite jusqu'aux supports de sortie (25).

16. Procédé selon la revendication 12, **caractérisé en ce que** ladite première étape comporte les sous-étapes suivantes:
- arrangement des supports d'alimentation (18) en alignement réciproque;
- déplacement simultané pas à pas des supports d'alimentation (18) en les amenant en séquence et cycliquement en correspondance avec au moins un magasin d'alimentation (10);
- transfert individuel des disques (2) du magasin d'alimentation (10) aux supports d'alimentation respectifs (18) en synchronisme avec le mouvement des supports de sortie (25).

17. Procédé selon la revendication 12, **caractérisé en ce qu'**après ladite cinquième étape on effectue les sous-étapes suivantes:
- déplacement pas à pas des supports de sortie (25) en séquence et cycliquement en correspondance avec au moins un magasin de sortie (29);
- transfert individuel des disques (2) depuis les supports de sortie (25) jusqu'au magasin de sortie (29) en synchronisme avec le mouvement des supports de sortie eux-mêmes.
